# EUROPEAN PATENT APPLICATION

(11) **EP 4 566 870 A1**
(43) Date of publication of application: **11.06.2025**
(21) Application number: 24217742.6
(22) Date of filing: 05.12.2024
(51) Int. Cl.: B60L 53/60, B60L 53/62, B60L 53/63, B60L 53/64, B60L 53/67, B60L 58/12, B60L 53/68, B60L 53/30, B60L 53/65, H02J 7/00

(54) **RESTRICTING THE CHARGING OF ELECTRIC VEHICLES**

(30) Priority: 06.12.2023 GB 202318616
(71) Applicant: Phoenix Energy Management Soft Limited, Bourne, Lincolnshire PE10 0FF (GB)
(72) Inventor: EVANS, Simon Christopher, Fleet, GU52 0UR (GB); BLACK, Ben Anthony, Leicester, LE9 8LE (GB)
(74) Representative: Atkinson & Company Intellectual Property Limited

(57) **Abstract**

A system is shown for restricting the charging of electric vehicles and includes an alternating current supply 101 for charging an electric vehicle 102; an enabling apparatus 104 connected between the alternating current supply and the electric vehicle; a user interface device 105 for establishing charging schedules, in which a charging period is divided into a plurality of charging slots; and a detector for detecting the presence of a variable constraint. A first charging schedule is established via the user interface device based on the requirements of a user and fixed constraints placed upon the availability of charging energy. A second charging schedule is defined via the user interface device that changes the availability of charging opportunities compared to the first schedule based on a variable constraint. The first schedule is transmitted to the enabling apparatus to facilitate charging in accordance with the requirements of the user. However, if the detector detects the presence of a variable constraint, the second charging schedule is transmitted to the enabling apparatus to accommodate changes to the availability of charging energy.

## Description

The present invention relates to a method of restricting the charging of electric vehicles, of the type in which a vehicle receives charge from an alternating current supply via an enabling apparatus and said enabling apparatus receives a schedule identifying charging times during which charging is enabled and non-charging times during which charging is not enabled.

The present invention also relates to a system for restricting the charging of electric vehicles, of the type comprising: an alternating current supply for charging an electric vehicle; an enabling apparatus connected between said alternating current supply and an electric vehicle; a user interface device for establishing charging schedules, in which a charging period is divided into a plurality of charging slots; a distributor for distributing a schedule to an enabling apparatus; and a detector for detecting the presence of a variable constraint,

An apparatus for controlling the charging of an electric vehicle from a domestic supply of electricity (typically an AC supply) is shown in GB 2601308, assigned to the present applicant. The apparatus is configured to be connected between a domestic supply and a battery charger for charging an electric vehicle. The apparatus includes a communication device for receiving power management commands from a management system. In addition, it includes a switching device for selectively connecting the domestic supply to an electrical outlet for the battery charger. A processor is configured to determine whether the electrical outlet can be activated to supply electricity to the battery charger by processing the power management commands. It then selectively activates a switching device in response to this determination. The power management commands are time based and identify charging intervals during which an electric vehicle may be charged and non-charging intervals during which the electric vehicle cannot be charged.

In the context of the present invention, the power management commands may be derived from a first charging schedule based on the requirements of a user and fixed constraints placed upon the availability of charging energy. These fixed constraints may be determined by the total availability of energy available to a housing estate for example. This energy may be received from a national grid supply, from local generation equipment or from a combination of these two. The fixed constraints therefore relate to constraints placed on the system most of the time and, for example, may restrict charging during peak intervals during which substantial amounts of energy are required for other purposes. Thus, the first charging schedule primarily allows charging during off-peak periods to ensure that, at any point in time, the total power consumption does not exceed a predetermined level.

The inventors have identified problems with the known system, particularly when unforeseen events occur that may be identified generally as variable constraints. Thus, although schedules may be modified manually and downloaded, opportunities may be missed for increasing the availability of charging opportunities when additional energy is available, possibly due to decreased demand on warm days or increased generation capacity. Similarly, it may be necessary to reduce charging opportunities, possibly due to increased demand due to bad weather or reduced availability due to maintenance or an emergency condition.

According to a first aspect of the present invention, there is provided a method of restricting the charging of electric vehicles of the aforesaid type characterized by the steps of: establishing a first charging schedule based on the requirements of a user and fixed constraints placed upon the availability of charging energy; defining a second charging schedule that changes the availability of charging opportunities compared to the first schedule based on a variable constraint; transmitting said first schedule to connected enabling apparatus to facilitate charging in accordance with user requirements; detecting the presence of a variable constraint; and transmitting said second charging schedule to said connected enabling apparatus in response to said detecting step, thereby changing charging availability and accommodating the variable constraint.

In an embodiment, a fixed constraint comprises a limit on a maximum power level, wherein non-charging times are identified during regular times of peak demand. A variable constraint may be based on the availability of locally generated energy, wherein charging times are identified during regular times of peak demand to encourage greater local consumption of said locally generated energy. The variable constraint may be detected by measuring the amount of energy generated locally and detecting a surplus.

In an embodiment, a variable constraint is based on the availability of locally generated energy, wherein non-charging times are expanded to reduce consumption of locally generated energy. The variable constraint may be detected by measuring the amount of energy generated locally and detecting a short-fall. Alternatively, the variable constraint is detected from weather report data. In an embodiment, a variable constraint represents an extreme condition during which all vehicle charging is to be prevented. Furthermore, the variable constraint may be detected in response to an output signal generated by an emergency system. Alternatively, the variable constraint may be detected in response to network data from a remote source providing an advance warning of a required shut-down.

According to a second aspect of the present invention, there is provided a system for restricting the charging of electric vehicles of the aforesaid type, characterized in that: a first charging schedule is established via said user interface device based on the requirements of a user and fixed constraints placed upon the availability of charging energy; a second charging schedule is defined via said user interface device that changes the availability of charging opportunities compared to said first schedule based on a variable constraint; the first schedule is transmitted to the enabling apparatus to facilitate charging in accordance with the requirements of the user; and upon said detector detecting the presence of a variable constraint, said second charging schedule is transmitted to the enabling apparatus to accommodate changes to the availability of charging energy.

Embodiments of the invention will be described, by way of example only, with reference to the accompanying drawings. The detailed embodiments show the best mode known to the inventor and provide support for the invention as claimed. However, they are only exemplary and should not be used to interpret or limit the scope of the claims. Their purpose is to provide a teaching to those skilled in the art. Components and processes distinguished by ordinal phrases such as "first" and "second" do not necessarily define an order or ranking of any sort. In the drawings:
*Figure* 1 shows a system for restricting the charging of electric vehicles;
*Figure 2* illustrates operation of the system identified in *Figure 1*
*Figure 3* shows an example of a user interface device;
*Figure 4* shows operations performed by the processor identified in *Figure 3**;*
*Figure 5* shows an example of a graphical user interface;
*Figure 6* shows an example of a weekly schedule with fifteen-minute timeslots;
*Figure 7* shows the production of schedule data from a weekly schedule;
*Figure 8* shows an example on an enabling apparatus;
*Figure 9* shows a schematic representation of the enabling apparatus identified in *Figure 1*;
*Figure 10* details procedures performed by the processor identified in *Figure 9**;*
*Figure 11* shows the generation and monitoring of energy locally;
*Figure 12* shows a second charging schedule produced when a variable constraint identifies greater charging availability;
*Figure 13* shows a second charging schedule downloaded when a variable constraint indicates that less charging energy will be available;
*Figure 14* shows a second charging schedule downloaded in response to an emergency condition being identified as a variable constraint;
*Figure 15* shows the deployment of further constraint generators; and
*Figure 16* shows a further schedule of the second type.

### Figure 1

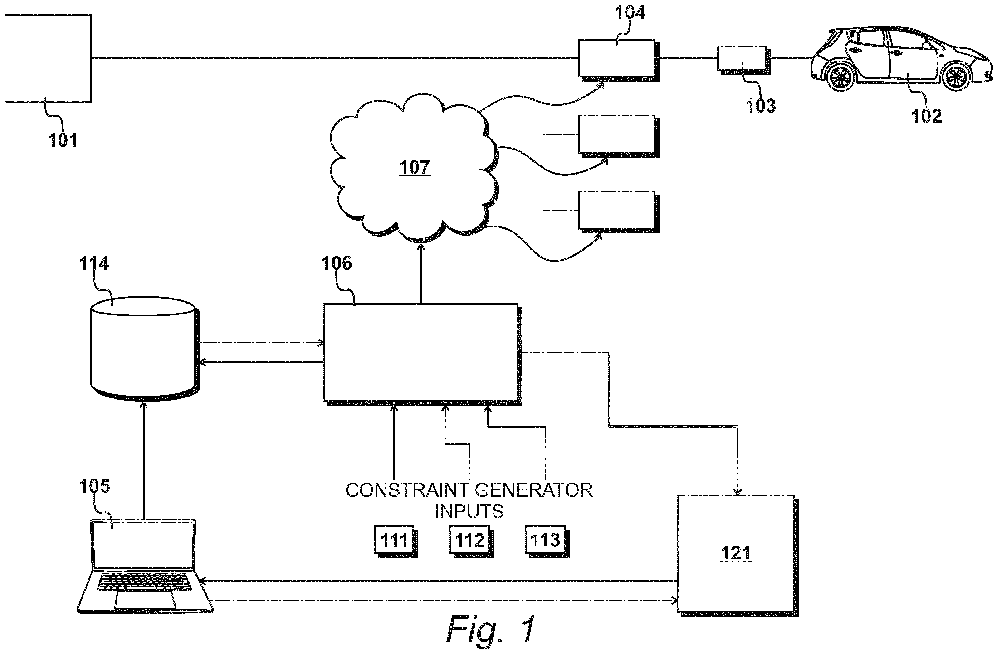

A system for restricting the charging of electric vehicles is shown in *Figure 1**.* An alternating current supply **101** is provided for charging an electric vehicle **102.** In this embodiment, the electric vehicle has an external charging device **103** for receiving electricity from the source **101** and communicating with the vehicle **102.** Thus, if power is available and the vehicle **102** requires charge, the device **103** will connect the mains supply **101** to the vehicle **102.**

In accordance with the invention, there is also provided an enabling apparatus **104** between the alternating current supply **101** and the vehicle **102.** As described in GB 2601308, it is possible for the enabling apparatus **104** to allow charging or to prevent charging at selected slots as defined by a schedule.

A user interface device **105** is provided for establishing charging schedules, in which a charging period (typically a day or a week) is divided into a plurality of charging slots. These schedules are distributed by a distributor **106,** typically connected to the Internet **107,** to distribute the schedules to the enabling apparatus, including enabling apparatus **104.** In a typical environment, many enabling apparatus will be provided to facilitate the simultaneous charging of a plurality of electric vehicles; possibly within a housing estate. Thus, it is possible for the user interface **105** to be responsible for establishing charging schedules for many users.

The system also includes at least one detector detecting the presence of a variable constraint. In an embodiment, the first variable constraint may relate to the availability of energy (possibly from local renewable sources), the second variable constraint may relate to weather conditions and a third variable constraint may relate to emergency conditions. Each of these provides an automatic detection of variable constraints and supplies data to the distributor **106.**

In the environment of *Figure 1*, a first charging schedule is established via the user interface device **105** based on the requirements of a user and fixed constraints placed upon the availability of charging energy. In addition, a second charging schedule is defined via the user interface **105** that changes the availability of charging opportunities, compared to the first schedule, based on a variable constraint. These schedules are stored in a schedule data storage device **114** that is configured to receive data from the interface device **105.** The distributor **106** is configured to select appropriate schedule data from the schedule data storage device **114** and convey this to selected enabling apparatus. Thus, when deployed, the first schedule is transmitted to the enabling apparatus **104** to facilitate charging in accordance with the requirements of the user. However, upon detecting the presence of a variable constraint, the second charging schedule is transmitted to the enabling apparatus to accommodate changes to the availability of charging energy.

In an embodiment, a plurality of second schedules are stored suitable for changing the availability of charging slots in response to a plurality of variable constraints. A plurality of detectors are provided (**111** to **113**) for detecting respective variable constraints, resulting in the selection of an appropriate second schedule.

In an embodiment, the system includes a machine learning apparatus **121.** The machine learning apparatus receives details of variable constraints when they occur and also receives details of the resulting downloaded second schedule. Manual input details are then supplied to the machine learning apparatus **121** via the user interface device **105.** After receiving a significant number of datasets, the machine learning apparatus **121** is then in a position to make suggestions for improving the second schedules, which involves changing the actual nature of the second schedules, in terms of slots when charging can occur and when charging cannot occur. In addition, this may also involve providing advice in terms of when a second schedule should be deployed. Thus, for example, over time, the machine learning apparatus should improve the effectiveness of deploying the appropriate second schedule for a particular anticipated weather event.

### Figure 2

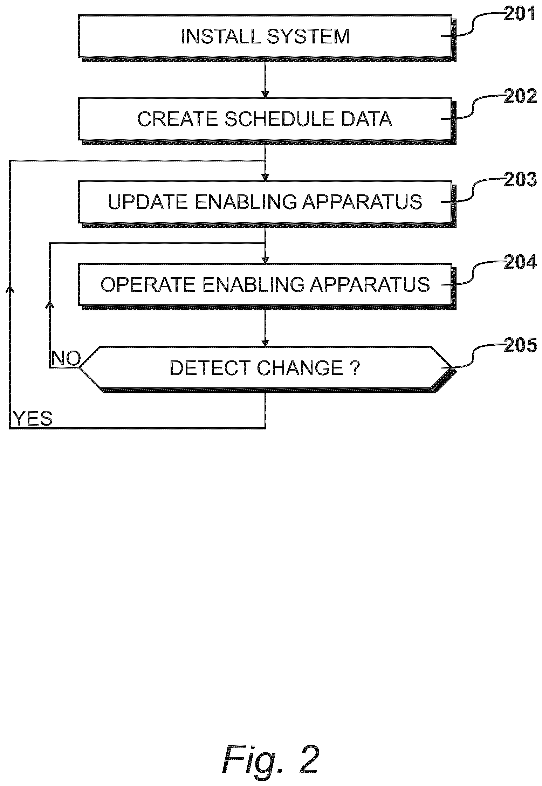

Operation of the system, described with reference to *Figure 1**,* is illustrated in *Figure 2**.* At step **201** the system is installed and at step **202** schedule data is created. The schedule data created at step **202** relates to schedules for normal operation following the fixed constraints, mainly to ensure that total power consumption does not exceed a predetermined limit. A schedule of this type may be supplied to all of the enabling apparatus. Alternatively, different schedules of the first type may be supplied to enabling apparatus based on customer preferences and levels of service.

Step **202,** for the creation of schedule data, also includes defining second charging schedules that change the availability of charging opportunities, compared to the first schedules, based on variable constraints.

At step **203,** the enabling apparatus **104** is updated by the transmission of the first schedule to the enabling apparatus, via the Internet **107,** to facilitate charging in accordance with user requirements. Thereafter, at step **204,** the enabling apparatus is operated to allow, or prevent, vehicle charging.

At step **205,** a question is asked as to whether a change has been detected and if answered in the negative, which would be the usual situation, operation of the enabling apparatus continues at step **204** in accordance with the first charging schedule. However, if the question asked at step **205** is answered in the affirmative, the control units are again updated at step **203** and operation at step **204** is then performed in accordance with the second charging schedule. Thus, this will continue until a change is again detected at step **205.**

### Figure 3

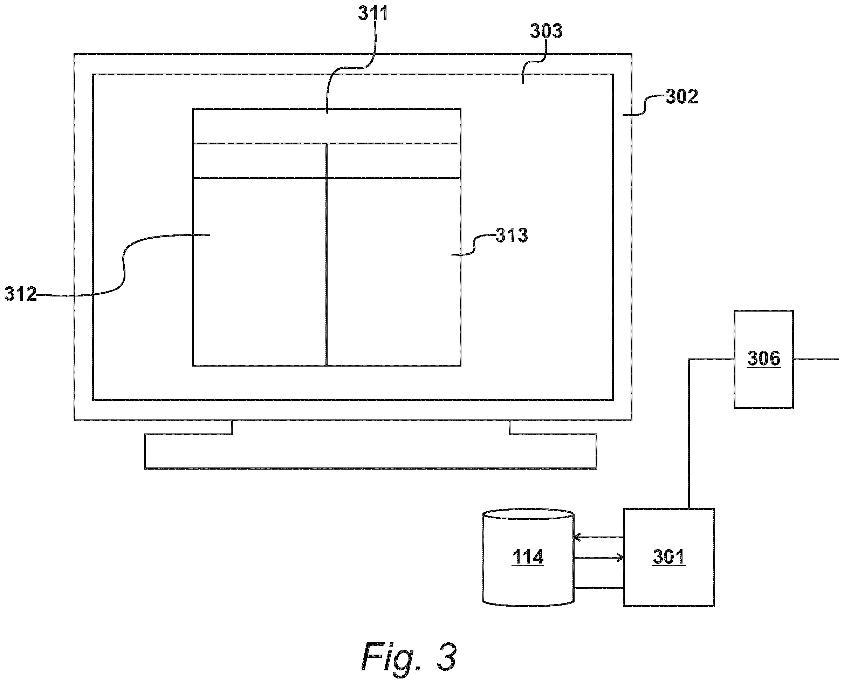

An example of a user interface device **105** is shown in *Figure 3* and includes a processor **301** that communicates with input devices and a graphical display **302.** The graphical display **302** presents a graphical user interface **303** to an operative to facilitate the establishment of schedules, possibly created on a daily basis or on a weekly basis. Furthermore, the processor **301** communicates with the data storage device **114** and an Internet connection **306** provides a connection to the Internet **107.**

Within the graphical user interface **303,** a specific enabling apparatus may be identified in a first region **311.** A first column **312** allows time intervals to be specified and for each specified time interval, a second column **313** allows entries to be made to state whether charging is possible or whether charging is to be inhibited.

After establishing a schedule for a particular enabling apparatus, the processor **301** writes details to the data storage device **114** from which schedule data can be derived for transmission to the selected enabling apparatus **104.**

In addition to creating schedule data for normal operation, schedules are also be created that take account of variable constraints. Thus, these can be deployed to effect changes due to local generation conditions, expected weather conditions or emergency conditions etc.

### Figure 4

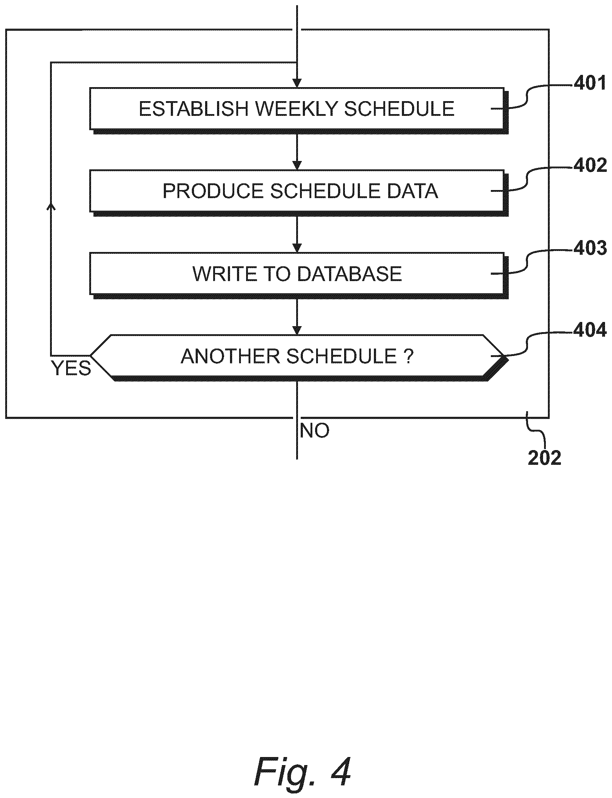

Operations performed by the processor **301** to create schedule data, as identified in *Figure 2**,* are detailed in *Figure 4**.* At step **401,** a weekly schedule is established which, in an embodiment, involves interacting with the user interface device **105.** Thus, the established weekly schedule may at this stage be considered as something that can be presented to an operative and, possibly, to a customer during an interactive session of schedule establishment.

At step **402,** the established weekly schedule is processed to produce schedule data. In this embodiment, it is the schedule data produced at step **402** that is written to the data storage device **114** at step **403.** Thereafter, at step **404,** a question is asked as to whether a further schedule is to be established and when answered in the affirmative, the next weekly schedule is established at step **401.**

As an alternative to producing daily schedule data from a weekly schedule, a schedule may be specified for each individual day. Furthermore, schedule data could be downloaded on a daily basis and it may be necessary to download new schedule data each day. Thus, each day, a decision may be taken as to whether a standard first charging schedule is downloaded, having encountered no variable constraints, or whether an appropriate second schedule is downloaded having encountered a variable constraint.

### Figure 5

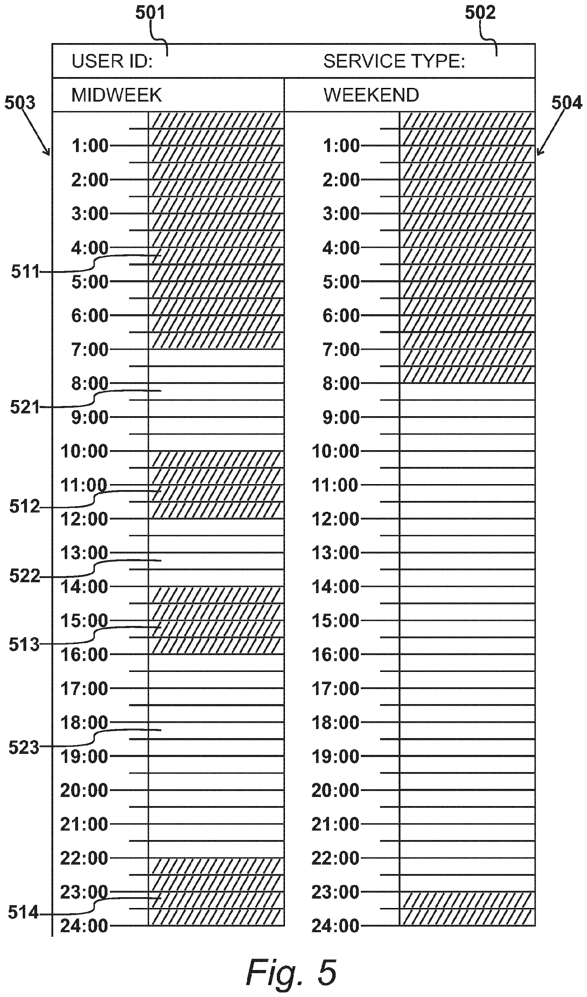

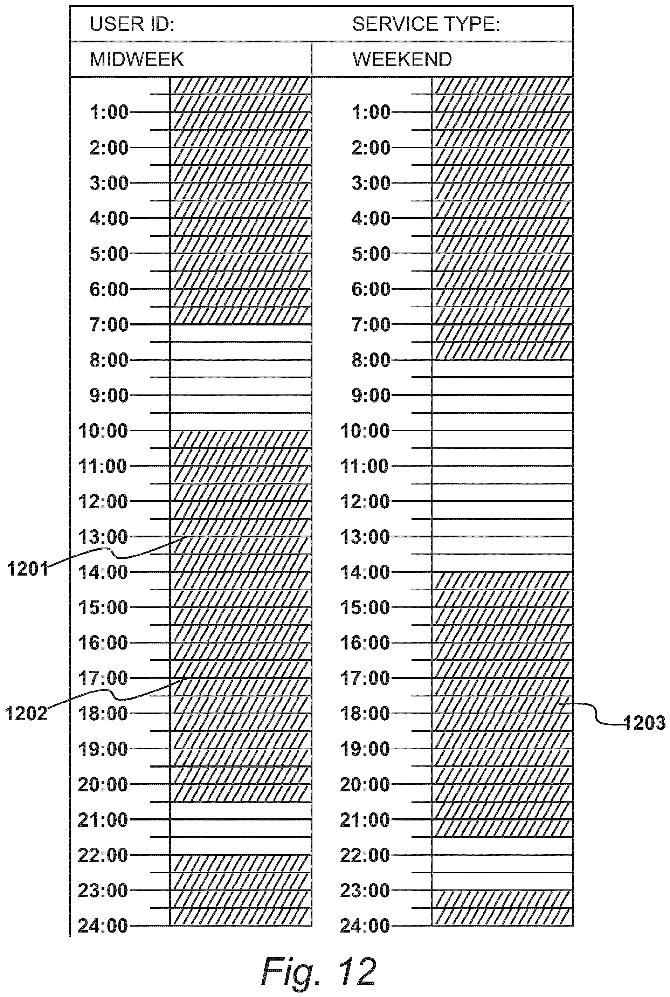

An example of a graphical user interface is illustrated in *Figure 5**.* A specific user may be identified at **501** which in turn relates to a specific enabling apparatus, such as enabling apparatus **104.** Thus, this schedule relates substantially to normal operation when no unusual events have been detected. However, as described with reference to *Figure 12* to *Figure 14**,* alternative schedules can be produced of the second type which are deployed when variable constraints are detected.

A service type is identified at **502.** For a type 1 schedule, this takes account of fixed constraints applicable to all users or applicable to a specific user - if differing qualities of service are available. In addition, the service type **502** may identify specific type 2 schedules that take account of different variable constraints. Thus, compared to a standard type 1 schedule, a type 2 schedule may increase or decrease available charging slots depending upon the nature of the variable constraint.

In the example shown in *Figure 5**,* the weekly schedule is divided into a midweek schedule **503** and weekend schedule **504.** The midweek schedule **503** represents a midweek day (Monday to Friday) with the weekend schedule **504** representing a weekend day of Saturday or Sunday. Each day is then divided into contiguous slots of less than one hour. The slots are contiguous to ensure that there are no times during which the availability of charge is ambiguous. The actual duration of these timeslots may vary but, in an embodiment, the contiguous intervals are of substantially similar duration.

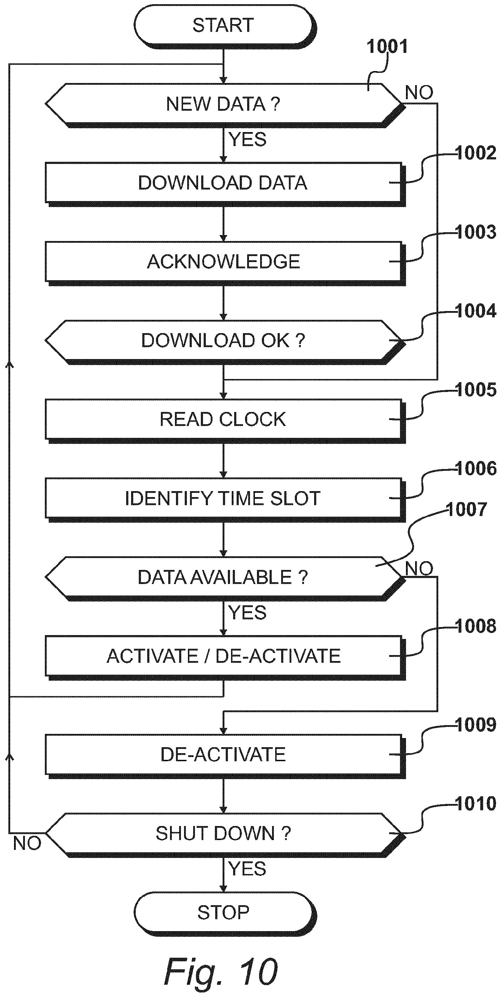

The contiguous timeslots may have a duration of between five minutes and thirty minutes. In the embodiment shown in *Figure 5**,* the contiguous timeslots have a duration of thirty minutes, such that forty-eight timeslots of equal duration are present within each twenty-four-hour day. Thus, in this way, it is possible for the schedule to be interrogated during each time slot to determine whether charging is to be permitted or inhibited, as described with reference to *Figure 10**.*

In this embodiment, as shown in *Figure 5**,* shaded regions, such as a first shaded region **511,** a second shaded region **512,** a third shaded region **513** and a fourth shaded region **514** represent intervals (consisting of one or more timeslots) during which electric vehicle charging is permitted. Similarly, the unshaded regions, such as a first unshaded region **521,** a second unshaded region **522** and a third unshaded region **523** represent intervals during which the charging of electric vehicles is inhibited.

In an embodiment, when producing this schedule, it is possible, within the graphical user interface, for an operative to mouseover the region in order to change a timeslot from one during which charging is not permitted to one during which charging is permitted. In an alternative embodiment, mouse clicking of individual timeslots may be required.

In accordance with this being a schedule of the first type, charging is permitted from midnight to 7:00am, then from 10:00am to twelve noon, from 2:00pm to 4:00pm and then from 10:00pm to twelve midnight. At other times, charging is not permitted.

In this example, the availability of charging slots over the weekend is more restricted. As shown in *Figure 5**,* charging is allowed overnight from midnight until 8:00pm (whereas it is only allowed until 7:00am during weekdays). However, for most of the day, charging is not possible and only becomes possible again after 11:00pm.

### Figure 6

The weekly schedule described with reference to *Figure* 5 provides contiguous timeslots that have a duration of thirty minutes. In other embodiments, the contiguous timeslots may have any duration and an embodiment may allow adjustment between timeslots of five minutes and intervals of thirty minutes.

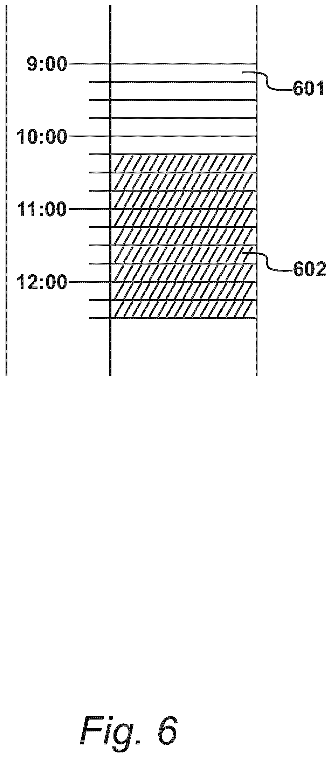

In the example shown in *Figure 6**,* each timeslot, such as unshaded timeslot **601,** has a duration of fifteen minutes. Thus, as can be seen in *Figure 6*, between 9:00am and 10:00am there are four programmable timeslots. In this example, a charging region **602** has been defined that will allow charging to take place from 10:15 to 12:30.

### Figure 7

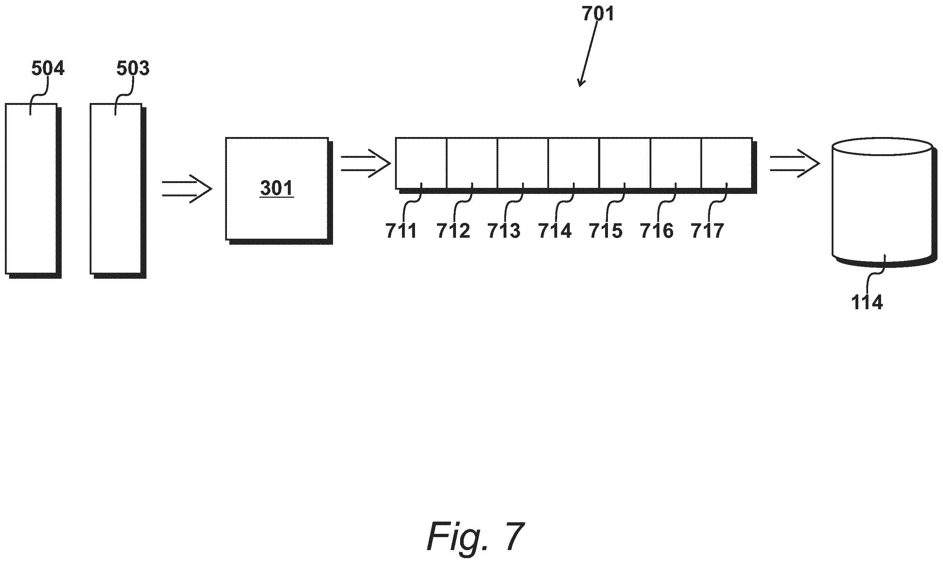

In an embodiment, a weekly schedule, of the type described with reference to *Figure 5**,* is established and from this, schedule data is produced, as indicated at step **202.** An example of the production of schedule data is illustrated in Figure 7.

As previously described, a mid-week schedule **503** has been produced along with a weekend schedule **504.** Processor **301** converts the weekly schedule to schedule data **701** and writes this schedule data to the schedule data storage device **114;** such that the schedule data is then available to be downloaded to an enabling apparatus.

The schedule data **701** identifies contiguous charging timeslots over a full seven-day weekly period. Thus, in this embodiment, the schedule data may consist of a first portion **711** for Monday, a second portion **712** for Tuesday, a third portion **713** for Wednesday, a fourth portion **714** for Thursday, a fifth portion **715** for Friday, a sixth portion **716** for Saturday and a seventh portion **717** for Sunday. Thus, each day of the week is specified for the enabling apparatus, with each day having its own contiguous timeslots, identifying intervals during which charging is possible and intervals during which charging is not possible.

In an alternative embodiment, it is possible for data to be downloaded on a daily basis. In an embodiment, each specific day or week must receive its own assigned schedule data and if data has not been received for a specific day, charging is permanently disabled until new schedule data is received. In this way, all enabling apparatus are disabled (to prevent charging) if a fault condition exists and charging schedule data cannot be downloaded.

In a further alternative embodiment, it is not necessary to download new schedule data and weekly schedule data continues to be used until new data is received. However, heartbeat signals are regularly exchanged between the distributor and each enabling apparatus and an enabling apparatus is permanently disabled (charging not being allowed) if its connection to the distributor is lost.

### Figure 8

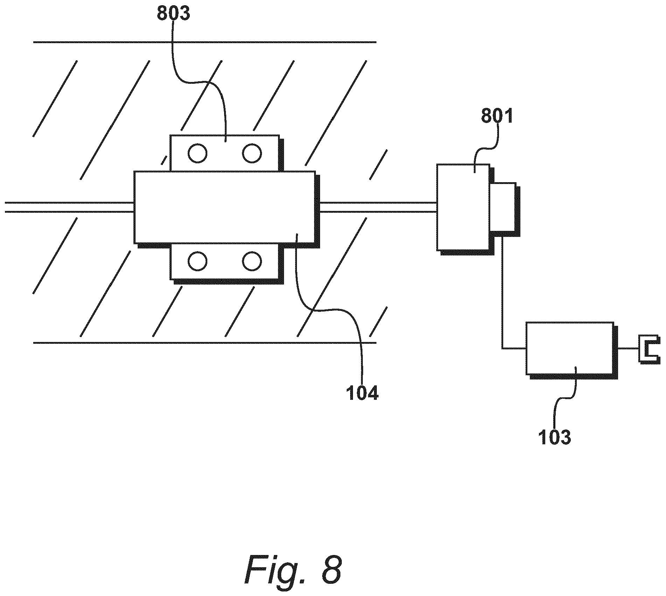

An example of an enabling apparatus **104** is shown in *Figure 8**,* connected between the alternating current supply **101** and a charging outlet **801.** The charging outlet **801** may be a dedicated unit installed for the purposes of charging an electric vehicle. Alternatively, an external charging device **103** may be connected to the charging outlet **801.**

In an embodiment, the enabling apparatus **104** includes mechanical attachments **803** for securing the apparatus at a position between a domestic distribution consumer unit and the charging outlet **801.**

### Figure 9

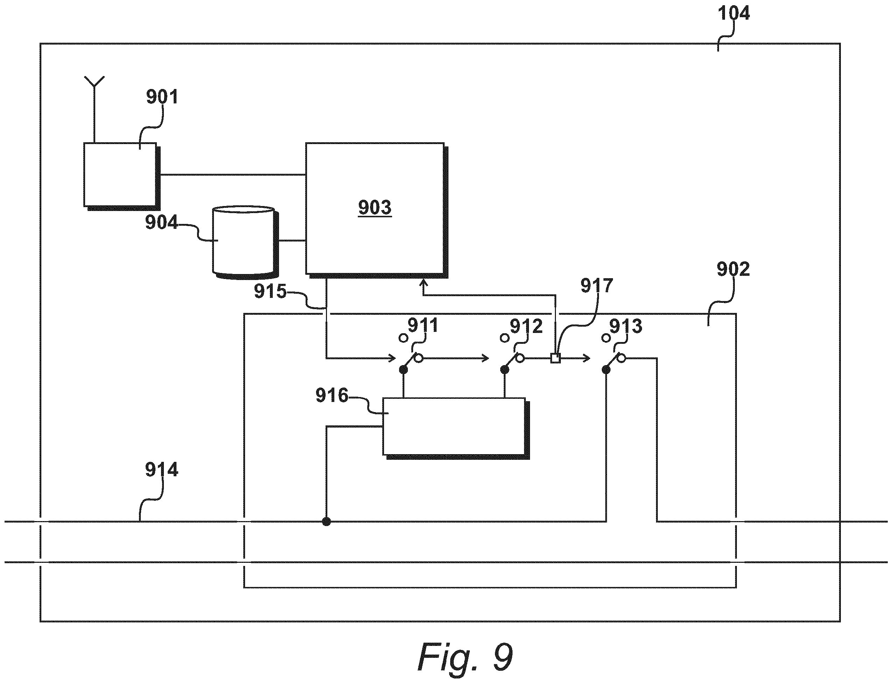

A schematic representation of the enabling apparatus **104** is shown in *Figure 9**.* The apparatus includes a communication device **901** which may establish radio communication within the environment of a dwelling. This in turn provides communication via the Internet **107** to the distributor **106,** allowing schedule data to be downloaded. Alternatively, the enabling apparatus may be connected to a cellular data network Furthermore, in an embodiment, data relating to confirmation of use may be uploaded.

A switching device **902** selectively connects the alternating current supply **101** to the charging outlet **801.** A processor **903** determines whether the electrical output can be activated to supply electricity to the charging outlet by making reference to the schedule data, as described with reference to *Figure 10**.* Thus, the processor **903** selectively activates a switching device **902** in accordance with the respective locally stored weekly schedule data.

In an embodiment, schedule data received from the distributor **106** is stored locally in a local database **904** that is in communication with the processor **903.** Furthermore, database **904,** or an alternative database, may store output data identifying when charging has actually taken place.

In an embodiment, the switching device **902** comprises a plurality of cascaded relays. In the embodiment illustrated in *Figure 9**,* three cascaded relays are provided, comprising a first relay **911,** a second relay **912** and a third relay **913.** Electricity from the alternating current supply is supplied directly to the third relay **913** over a powerline.

The processor **903** includes an output port **915** configured to supply a relatively low voltage control signal to the first relay **911.** The first relay **911** and the second relay **912** receive power from a local power supply **916** at appropriate voltages derived from the alternating current supply **101.** Activation of the first relay **911** results in the activation of the second relay **912,** effectively amplifying the level of the control signal, such that sufficient current is provided to activate the third relay **913.**

In an embodiment, a Hall effect detector **917** monitors current flowing to control the third relay **913,** thereby providing output data specifying that the third relay has been activated and confirming that power has been made available to the charging outlet **801.**

### Figure 10

Procedures performed by the processor **903** are detailed in *Figure 10**.* After start-up, a question is asked at step **1001** as to whether new data is available. That is to say, does the distributor **106** have new schedule data that is to replace existing schedule data. When answered in the affirmative, the data is downloaded at step **1002** and an acknowledgement is then provided back to the distributor **106** at step **1003.**

In an embodiment, the schedule data includes a checksum in addition to the data described with reference to *Figure 7*. Thus, at the processor **903,** a parity check is made with reference to this checksum and if an error is identified, this condition is sent back to the distributor which will in turn downloads the data again. Similarly, if the checksum is successful, this condition may also be identified back to the distributor **106.**

It is also appreciated that the volume of data transmitted is relatively small. Thus, in an embodiment, it is possible for the downloaded data to be retransmitted back to the distributor **106,** which in turn may perform a comparison between what was transmitted and what was received back. If the two datasets are equivalent, this condition may be notified back to the processor **903** indicating that a successful download has occurred. Alternatively, if the datasets differ, a fault condition may be identified and the process may be repeated. Thus, eventually, the question asked at step **1004** will be answered in the affirmative, to the effect that the download has been successful; unless a serious equipment fault exists, which requires maintenance. Under fault conditions, the enabling apparatus **104** is disabled, such that no charging events may occur until the equipment has been restored to a fully functional condition.

The processor **903** is now in a state suitable for operating locally and a real-time clock is read at step **1005.** For the purposes of providing an example, it may be assumed that the real-time clock identifies a time of 8:25:23 on a Wednesday. Referring to the schedule shown in *Figure 5*, this falls within interval **521** and the specific timeslot (between 8:00am and 8:30) confirms that charging is not possible. Thus, after identifying the timeslot at step **1006,** a question is asked as to whether data is available at step **1007.** Following the above example, this question will be answered in the affirmative and the deactivation of the apparatus will be confirmed at step **1008.** The procedure then returns to step **1001** to consider whether new data has been received.

In an alternative embodiment, after step **1008,** the procedure may return to step **1005** and repeat the reading of the clock and the identification of timeslots. These procedures are performed continually until an interrupt is received. Thus, in this alternative embodiment, the arrival of new data creates an interrupt and the servicing of this interrupt results in the execution of steps similar to steps **1002** to **1004.** Furthermore, when constructed using high level programming languages, the two procedures could be specified as individual threads within the programming structure. However, the resulting functionality is substantially similar, in that the interrogation of schedule data will continue to be performed until new data is available.

Even when using relatively inexpensive processing devices, the period between individual interrogations of the schedule data will be in the order of milliseconds. Thus, when new schedule data becomes available, this is rapidly analysed, written to local storage and acted upon. Thus, in this way, it is possible to make relatively rapid changes to the availability of charging opportunities; rapidly operating in response to a second charging schedule as distinct from the previously established first charging schedule.

In an embodiment, if schedule data is not available, it is not possible for the enabling apparatus to allow the charging of an electric vehicle. To achieve this, as previously stated, a question is asked at step **1007** as to whether data is available. If this question Is answered in the negative, the system is deactivated at step **1009.** Thereafter, a question is asked at step **1010** as to whether a full shutdown is to occur and the process stops if this question is answered in the affirmative. Alternatively, If the question asked at step **1010** is answered in the negative, control is returned to step **1001** to enquire as to whether new data is available.

### Figure 11

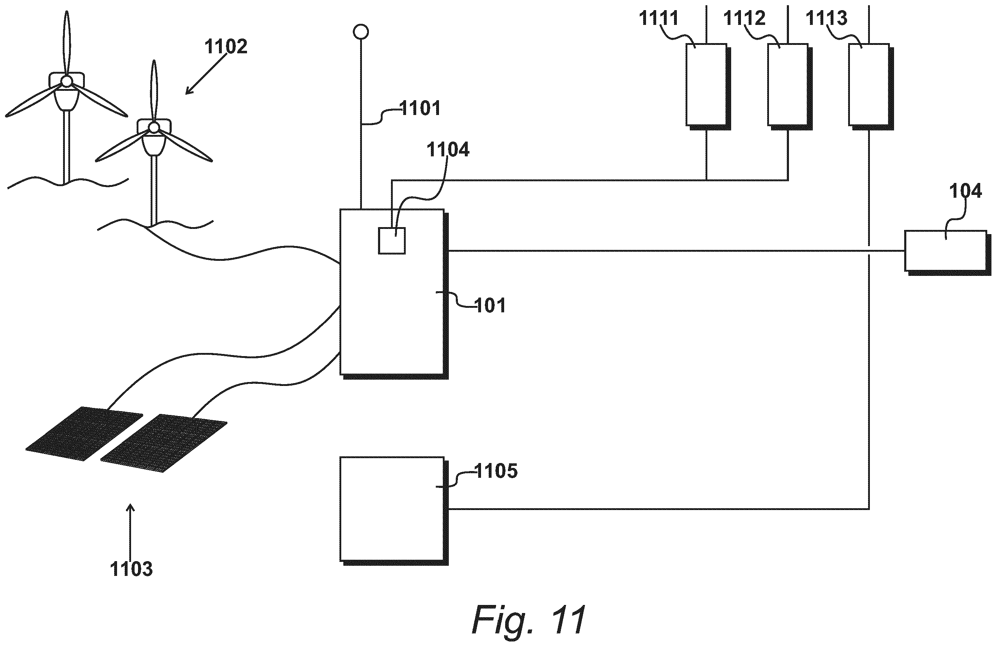

The alternating current supply **101** is shown in *Figure 11*, providing charging current to the enabling apparatus **104.** Alternating current may be supplied to the alternating current supply **101** from a grid-connected mains supply **1101.** In addition, or as an alternative, energy may be received from locally generated sources. Thus, in the example shown in *Figure 11*, energy is received from wind generators **1102** and solar generators **1103.** In some embodiments, energy is only available from locally generated sources and a distribution system established within the environment may be identified as a microgrid.

In alternative embodiments, energy is only received from a national grid connection **1101.** However, the total amount of energy received in this way may be limited due to physical constraints or contractual constraints, each representing fixed constraints. When greater reliance is made upon local generation, possibly within a microgrid environment, greater variations in energy availability are likely to occur and as a result, more variable constraints are likely to occur.

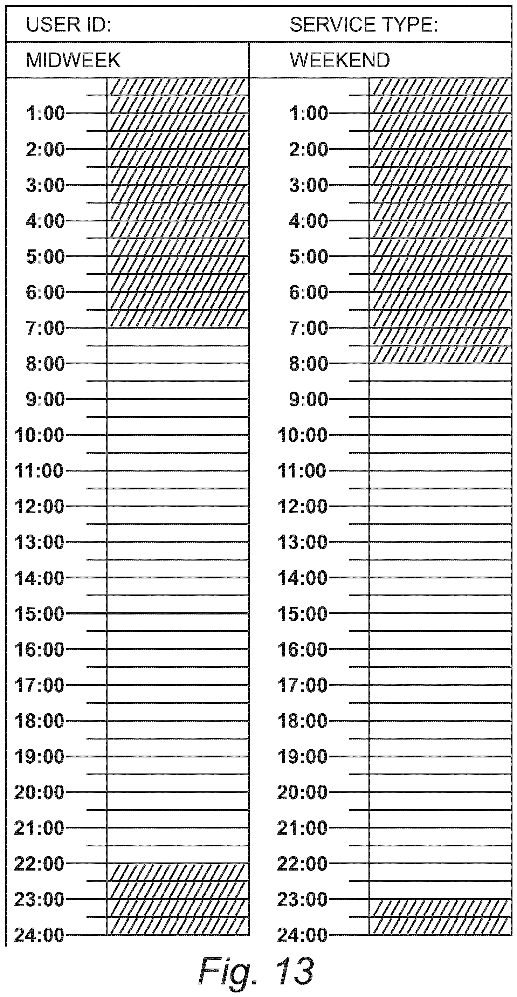

In the embodiment shown in *Figure 11*, a detector **1104** is provided that is configured to detect the availability of locally generated energy; from the wind source **1102** or from the solar source **1103** or from a combination of these. The detector **1104** provides an output, representing the availability of locally generated energy, to a first constraint generator **1111** and to a second constraint generator **1112.** The first constraint generator **1111** provides an output to the distributor **106** when an increased level of locally generated energy is detected, resulting in the downloading of a second schedule that increases the number of slots during which charging is enabled; as described with reference to *Figure 12*. The second constraint generator **1112** provides an output to the distributor **106** when a reduced level of locally generated energy is detected, such that the second schedule decreases the number of slots during which charging is enabled; as described with reference to *Figure 13**.*

An emergency shutdown device **1105** is also provided which conveys an output signal to a third constraint generator **1113.** The emergency shutdown device **1105** may detect an emergency condition at the site of locally generated energy. This may be connected to other emergency signal generating equipment, such as a fire alarm system. Furthermore, the activation of a device in this way may impose other stricter shutdown constraints upon the system as a whole. However, as part of this, appropriate schedules of the second type may be downloaded to prevent the charging of electric vehicles while this emergency condition persists.

### Figure 12

The system described with reference to *Figure 1* to *Figure 11* facilitates the implementation of a method of restricting the charging of electric vehicles, in which a vehicle receives charge from an alternating current supply via an enabling apparatus **104** and the enabling apparatus receives a schedule identifying charging times during which charging is enabled and non-charging times during which charging is not enabled. A first charging schedule (*Figure 5*) is established based on the requirements of a user and fixed constraints placed upon the availability of charging energy. Thus, a user may be required to charge a vehicle during each day of the week and the energy available within the system as a whole is only sufficient to permit the charging of vehicles outside the intervals of peak demand.

In addition, the method defines a second charging schedule that changes the availability of charging opportunities compared to the first schedule based on a variable constraint. In an embodiment, several variable constraints may exist and these constraints may vary to differing degrees. Thus, such an embodiment requires a plurality of second charging schedules; also referred to as charging schedules of the second type.

The first schedule is transmitted to connected enabling apparatus, in the form of schedule data in an embodiment, to facilitate charging in accordance with user requirements. However, at any time, the system is in a position to detect the presence of a variable constraint. Upon making this detection, the second charging schedule is transmitted to the connected enabling apparatus, thereby changing the charging availability and accommodating the variable constraint; without mental anticipation or manual interaction.

In an embodiment, a variable constraint is based on the availability of locally generated energy. In this environment, the fixed constraint may be defined such as to facilitate charging when electricity generation is expected; that is to say, when it is expected that the wind will be blowing and/or when it is expected that the sun will be shining. However, as is well known in these environments, variations occur, such that a greater level of energy may be produced on windy/sunny days and less energy may be produced on calm/dull days.

The detector **1104** identifies the amount of energy that is being generated locally and provides this information to the first constraint generator **1111** and to the second constraint generator **1112.** The first constraint generator **1111** identifies conditions where the amount of energy being generated exceeds an expected level by a predetermined amount. In response to making an evaluation of this type, a signal is supplied to the distributor **106** which then transmits a second charging schedule to encourage greater local consumption of the locally generated energy. An example of such a schedule is shown in *Figure 12**.* For the purposes of this example, it is assumed that the schedule described with reference to *Figure 5* has previously been transmitted as the first schedule. The schedule is similar but has been enhanced, such that charging is now possible during an interval **1201** from 12:00 noon to 2:00pm. Furthermore, charging is now possible during a second interval **1202** between 4:00pm and 8:30pm.

Similarly, at the weekend, charging is now possible during a third interval **1203** between 2:00pm and 9:30pm. Thus, the variable constraint has been detected by measuring the amount of energy generated locally and detecting a surplus. Thus, the schedule shown in Figure 12, from which schedule data is produced, may be identified as a schedule of the second type applicable when more generation is possible.

### Figure 13

The alternative condition to that described with reference to *Figure 12* is shown in *Figure 13*. On this occasion, the second constraint generator **1112** has detected a condition to the effect that less energy is being generated than expected. To accommodate this, the schedule shown in *Figure 13* is a schedule of the second type, during which less energy generation is possible. Charging is no longer permitted midweek between 10:00am and 12:00 noon. Furthermore, charging is no longer possible between 2:00pm and 4:00pm. Such a condition is likely to occur if local energy generation is severely limited and energy is only available from the grid supply **1101,** such that vehicle charging is only possible during off-peak periods.

### Figure 14

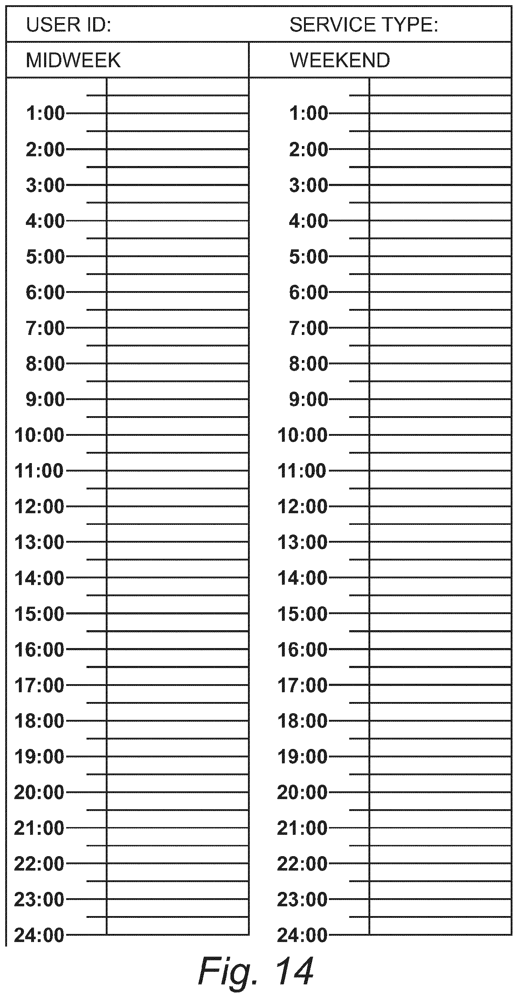

Activation of emergency device **1105,** either automatically or manually, is detected by the third constraint generator **1113,** which in turn conveys this information to the distributor **106.** The distributor selects and downloads a schedule of the second type which may be referred to as a maintenance schedule, as illustrated in Figure 14.

The schedule shown in Figure 14 effectively represents a complete shutdown, in that charging is not possible at any time. In an embodiment, as an alternative to distributing a schedule of the type shown in Figure 14, it could be possible to download data or a lack of data indicating that schedule data is not available. Thus, under these conditions, the question asked at step **1007** would be answered in the negative and the deactivation would occur at step **1009.**

The use of a schedule of the second type in accordance with that shown in Figure 14 would only be used under severe emergency conditions or would only be used for a limited period of time when maintenance operations are being performed and the system must be put off line. However, as used in the art, this does not represent an emergency shutdown condition and may as an alternative be referred to as a soft shutdown condition from which recovery is possible without taking additional safety related measures. Thus, in working environments, other systems, as are known in the art, are provided for creating emergency shutdown conditions when required, whereupon an inspection and an active reset operation would be required to revive the service.

### Figure 15

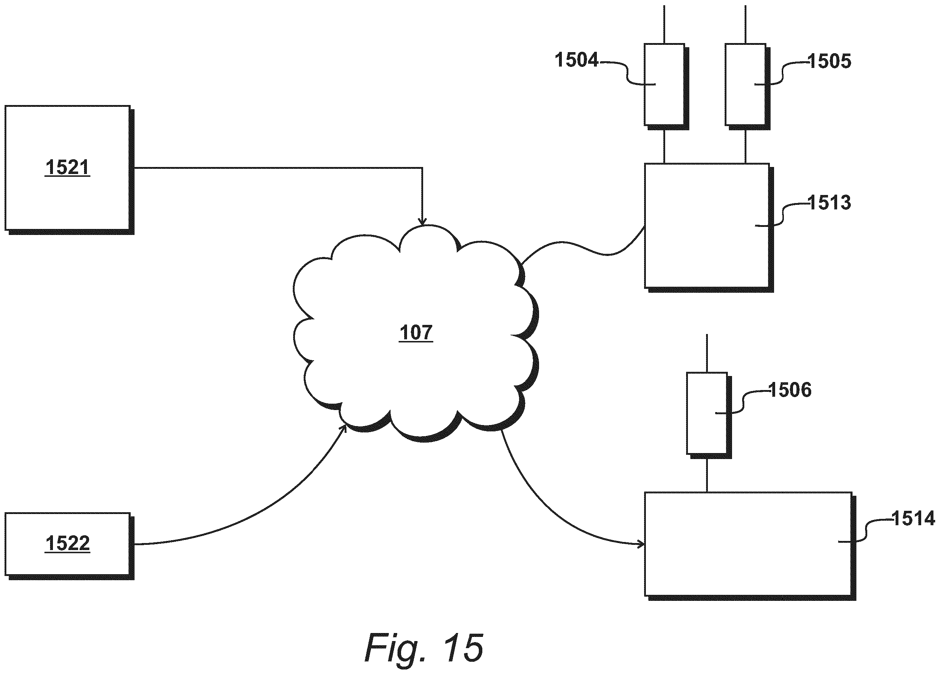

A fourth constraint generator **1504** is shown in *Figure 15**,* along with a fifth constraint generator **1505** and the sixth constraint generator **1506.** Each of these provide outputs to the distributor **106.** A third detector **1513** receives weather report data via the Internet **107** from a weather data source **1521.** The detector identifies weather conditions that improve local energy generation such that a second schedule may be downloaded that increases the number of slots during which charging is enabled. Thus, the fourth constraint generator supplies an output signal to the distributor for identifying periods of good weather so that an adjustment may be made to provide more charging slots.

In addition, the third detector **1513** identifies weather conditions that will increase domestic demand for energy, resulting in the distribution of a second schedule that decreases the number of slots during which charging is enabled. Thus, the fifth constraint generator supplies an output signal to the distributor **106** identifying periods when domestic demand may be high and vehicle charging opportunities must be reduced.

It is possible for a sophisticated dynamic to be created and experiment suggests that instabilities and rapid fluctuations can be avoided by deployment of the machine learning apparatus **121.** In particular, the detectors described with reference to *Figure 11* indicate changes that are required immediately; whereas, the detectors of *Figure 15* produce data relating to changes that are required in the future. Furthermore, an indication may be provided to the effect that more energy may be available due to strong winds but at the same time a reduction in ambient temperature may indicate that there will be a greater demand for domestic consumption. Thus, initially, these conflicts may be resolved by relatively crude algorithms but over time the response may be refined by deployment of the machine learning process.

A second source of data **1522** supplies event related data to a fourth detector **1514** via the Internet **107.** The event detector may identify particular events which, irrespective of the weather, may increase domestic demand and thereby reduce the availability of energy for charging electric vehicles. Such events may include Bank Holidays for example or major sporting events etc. The data Is analysed by the fourth detector **1514** and when appropriate, an output signal is produced by the sixth constraint generator **1506** which is supplied to the distributor **106,** again facilitating the distribution of an appropriate schedule of the second type.

### Figure 16

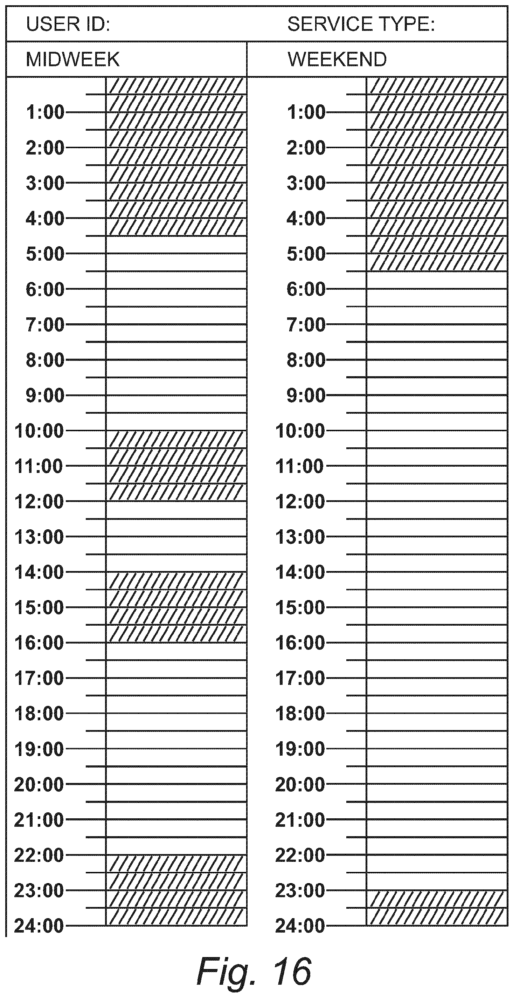

A further schedule of the second type is shown in *Figure 16**.* In response to identifying adverse weather conditions, charging is now not available between 4:30am and 7:00am on a midweek day. Furthermore, in anticipation of a major event occurring at the weekend, charging is no longer possible between 5:30 and 8:00am.

Thus, in summary, the variable constraint may be detected by measuring the amount of energy generated locally and detecting a shortfall or a surplus. Alternatively, the variable constraint may be detected from weather report data or the variable constraint may represent an extreme condition during which all vehicle charging is to be prevented. Similarly, the variable constraint may be detected in response to an output signal generated by an emergency system. Furthermore, the variable constraint could be detected in response to network data from a remote source providing an advance warning of a required shutdown, possibly due to weather conditions or possibly due to an anticipated unusual event that will place an unusual demand on domestic consumption.

## Claims

1. A method of restricting the charging of electric vehicles (102), in which a vehicle receives charge from an alternating current supply (101) via an enabling apparatus (103) and said enabling apparatus receives a schedule identifying charging times during which charging is enabled and non-charging times during which charging is not enabled, **characterized by** the steps of:
establishing a first charging schedule based on the requirements of a user and fixed constraints placed upon the availability of charging energy;
defining a second charging schedule that changes the availability of charging opportunities compared to the first schedule based on a variable constraint;
transmitting said first schedule to connected enabling apparatus to facilitate charging in accordance with user requirements;
detecting the presence of a variable constraint; and
transmitting said second charging schedule to said connected enabling apparatus in response to said detecting step, thereby changing charging availability and accommodating the variable constraint.

2. The method of claim **1, characterized in that** a fixed constraint comprises a limit on a maximum power level, wherein non-charging times are identified during regular times of peak demand.

3. The method of claim **1** or claim **2, characterized in that** a variable constraint is based on the availability of locally generated energy, wherein charging times are identified during regular times of peak demand to encourage greater local consumption of said locally generated energy.

4. The method of claim **3, characterized in that** the variable constraint is detected by measuring the amount of energy generated locally and detecting a surplus.

5. The method of claim **1** or claim **2, characterized in that** a variable constraint is based on the availability of locally generated energy, such that non-charging times are expanded to reduce consumption of locally generated energy.

6. The method of claim **5, characterized in that** the variable constraint is detected by measuring the amount of energy generated locally and detecting a short-fall.

7. The method of claim **5, characterized in that** the variable constraint is detected from weather report data.

8. The method of claim **1** or claim **2, characterized in that** a variable constraint represents an extreme condition during which all vehicle charging is to be prevented.

9. The method of claim **8, characterized in that** the variable constraint is detected in response to an output signal generated by an emergency system.

10. The method of claim **8, characterized in that** the variable constraint is detected in response to network data from a remote source providing an advance warning of a required shut-down.

11. A system for restricting the charging of electric vehicles, comprising:
an alternating current supply (101) for charging an electric vehicle;
an enabling apparatus connected between said alternating current supply and an electric vehicle;
a user interface device (105) for establishing charging schedules, in which a charging period is divided into a plurality of charging slots;
a distributor (106) for distributing a schedule to an enabling apparatus; and
a detector (111) for detecting the presence of a variable constraint, **characterized in that**:
a first charging schedule is established via said user interface device based on the requirements of a user and fixed constraints placed upon the availability of charging energy;
a second charging schedule is defined via said user interface device that changes the availability of charging opportunities compared to said first schedule based on a variable constraint;
the first schedule is transmitted to the enabling apparatus to facilitate charging in accordance with the requirements of the user; and
upon said detector detecting the presence of a variable constraint, said second charging schedule is transmitted to the enabling apparatus to accommodate changes to the availability of charging energy.

12. The system of claim **11,** wherein the detector (1111) is configured to detect the availability of locally generated energy.

13. The system of claim **12,** wherein an increased level of locally generated energy is detected and the second schedule increases the number of slots during which charging is enabled.

14. The system of claim **12,** wherein a reduced level of locally generated energy is detected and the second schedule decreases the number of slots during which charging is enabled.

15. The system of any of claims **11** to **14, characterized in that**:
a plurality of second schedules suitable for changing the availability of charging slots in response to a plurality of variable constraints;
a plurality of detectors for detecting respective variable constraints, resulting in the selection of an appropriate second schedule; and
a machine learning apparatus (121) configured to:
receive details of a variable constraint;
receive details of a resulting downloaded second schedule;
receive manual input details as to the effectiveness of the downloaded second schedule; and
make suggestions for improving said second schedules.
